# EUROPÄISCHE PATENTSCHRIFT

(11) **EP 4 295 997 B1**
(45) Veröffentlichungstag und Bekanntmachung des Hinweises auf die Patenterteilung: **09.04.2025**
(21) Anmeldenummer: 22180803.3
(22) Anmeldetag: 23.06.2022
(51) Int. Cl.: B23Q 11/00, B25J 15/04, B25J 19/00

(54) **WERKZEUGSCHNITTSTELLE SOWIE ROBOTER MIT EINER SOLCHEN WERKZEUGSCHNITTSTELLE**
TOOL INTERFACE AND ROBOT COMPRISING SUCH A TOOL INTERFACE
INTERFACE D'OUTIL, AINSI QUE ROBOT DOTÉ D'UNE TELLE INTERFACE D'OUTIL

(43) Veröffentlichungstag der Anmeldung: 27.12.2023
(73) Patentinhaber: IPR-Intelligente Peripherien für Roboter GmbH, 75031 Eppingen (DE)
(72) Erfinder: Schneider, Helge, 74336 Brackenheim (DE)
(74) Vertreter: Witte, Weller und Partner Patentanwälte mbB Stuttgart

(56) Entgegenhaltungen:
- EP-B1- 1 127 655
- EP-B1- 2 716 418
- DE-A1- 102020 100 682
- DE-A1- 3 214 025

## Beschreibung

### ANWENDUNGSGEBIET UND STAND DER TECHNIK

Die Erfindung betrifft eine Werkzeugschnittstelle sowie einen Roboter mit einer solchen Werkzeugschnittstelle.

Eine Werkzeugschnittstelle im Sinne der Erfindung dient dem Zweck, ein Roboterwerkzeug lösbar und wechselbar an einem Roboterarm anzubringen. Dabei verfügt eine gattungsgemäße Werkzeugschnittstelle über eine Anlagefläche zur Anlage an eine Anlagefläche einer korrespondierenden Schnittstelle auf Seite des Werkezeugs. Zusätzliche verfügt die Werkzeugschnittstelle über eine Kopplungseinrichtung, mittels derer die roboterarmseitige Werkzeugschnittstelle an einer korrespondierenden Schnittstelle des Werkzeugs mechanisch aneinander befestigt und insbesondere verriegelt werden kann.

Es ist bekannt, an der Schnittstelle einer Abblaseeinrichtung vorzusehen. Eine solche Abblaseeinrichtung verfügt üblicherweise über eine Düsenöffnung, durch die hindurch Druckluft im Zuge des Kopplungs- oder Entkopplungsvorgangs der Werkzeugschnittstelle in Form eines Luftstoßes abgegeben wird, um Verunreinigungen im Bereich der Anlagefläche zu beseitigen, da diese eine sichere Kopplung und ein genaues Arbeiten des Roboters erschweren.

Es wurde festgestellt, dass die mit bekannten Abblaseeinrichtungen erzielbare Reinigung jedoch mitunter nicht in der Lage sind, die gewünschte Abblasewirkung zu erzielen, so dass Verunreinigungen verbleiben. Zwar ist es möglich, über Abblaseeinrichtungen mit einer Mehrzahl von Druckluftkanälen und Düsenöffnungen die Reinigungsqualität zu erhöhen. Dies geht jedoch mit einem hohen Aufwand bei der Installation der Werkzeugschnittstelle einher und erhöht die Rüstzeiten in erheblichem Maße.

Aus der EP 2716418 B1 ist eine Kopplungseinrichtung mit einer Ausblaseinrichtung bekannt, wobei mittels der Ausblaseinrichtung Kontaktstellen gereinigt werden können. Das Dokument schlägt eine Ausblaseinrichtung vor, die einen Hohlzylinder mit Axial- und Lateraldüsen aufweist.

Aus der EP 1127655 B1 ist eine Ausblaseinrichtung für eine Mehrfachkupplung bekannt. Darin wird eine Gestaltung mit einem einem über eine Kopplungsfläche heraus ragenden Rundkörper mit mehreren Druckluftdüsen vorgeschlagen.

### AUFGABE UND LÖSUNG

Aufgabe der Erfindung ist es, eine Werkzeugschnittstelle der eingangs beschriebenen Art zur Verfügung zu stellen, die eine vorteilhafte Möglichkeit zur Anbringung bietet.

Vorgeschlagen wird zu diesem Zweck primär eine erfindungsgemäße Werkzeugschnittstelle. Die Erfindung umfasst darüber hinaus auch das Set aus dieser Werkzeugschnittstelle und einer korrespondierenden Schnittstelle am Werkzeug sowie den Roboter, an dessen Roboterarm die Werkzeugschnittstelle vorgesehen. Weiterhin umfasst ist ein Betriebsverfahren in Hinblick auf den Betrieb des Roboters.

Eine erfindungsgemäße Werkzeugschnittstelle verfügt über eine Anlagefläche zur Anlage einer korrespondierenden Anlagefläche des Werkzeugs. Wenngleich es möglich ist, diese Anlageflächen korrespondierend miteinander nicht-eben zu gestalten, wird eine ebene Gestaltung der Anlagefläche als vorteilhaft angesehen. Vorzugsweise liegen mindestens 80% einer Kontaktfläche in einer gemeinsamen Anlageebene. Die Anlagefläche ist vorzugsweise eine zumindest überwiegend metallische Anlagefläche. In einem Randbereich der Anlagefläche kann eine umlaufende Dichtung vorgesehen sein, die zur Anlage an der Anlagefläche des Werkzeugs vorgesehen ist und ein Eindringen von Schmutz im Betrieb erschwert.

Die Dichtung umgibt insbesondere vorzugsweise auch die elektrische Kontaktflächen zur Übertragung von Daten und/oder elektrischer Energie. In einem gekoppelten Zustand der Werkzeugschnittstelle sind die Kontaktflächen daher durch die Dichtung gegen Verschmutzungen von außen geschützt sind.

Die Werkzeugschnittstelle verfügt über eine Kopplungseinrichtung zur mechanischen Kopplung des Werkzeugs an die Werkzeugschnittstelle. Vorzugsweise weist diese Kopplungseinrichtung mindestens einen konischen oder sich anderweitig verjüngenden Ausrichtungsstift auf, der beim Ankoppeln an das Werkzeug in eine daran vorgesehene korrespondierende Aufnahme einrückt. Insbesondere vorzugsweise sind zwei derartige Ausrichtungsstifte vorgesehen. Alternativ können die Ausrichtungsstifte auch am Werkzeug vorgesehen sein, so dass die roboterarmseitige Werkzeugschnittstelle stattdessen korrespondierende Aufnahmen aufweist. Insbesondere zusätzlich hierzu weist die Kopplungseinrichtung vorzugsweise einen Verriegelungsmechanismus auf zur formschlüssigen Kopplung des Werkzeugs an der Werkstückschnittstelle. Dieser Verriegelungsmechanismus kann insbesondere Riegelkörper aufweisen, die nach Ansetzen des Werkzeugs an die Werkzeugschnittstelle quer zur Fügerichtung verschoben werden und dadurch in eine korrespondierende Aufnahme am Werkzeug einrücken. Bei den Riegelkörpern kann es sich insbesondere um Kugeln in einem zentrischen Verriegelungsstutzen handeln, die durch einen Steuerstift radial nach außen und damit in mindestens eine Aufnahme an der Werkzeugseite hineingedrückt werden.

Die erfindungsgemäße Werkzeugschnittstelle verfügt über eine Abblaseeinrichtung zur Erzeugung eines Abblaseluftstroms im Bereich der Anlagefläche. Die Erfindung betrifft primär die besondere Ausgestaltung dieser Abblaseeinrichtung.

Erfindungsgemäß weist die Abblaseeinrichtung eine Mehrzahl von Düsenöffnungen zur Abgabe des Abblaseluftstroms auf.

Die Druckluft wird mittels der mindestens zwei und vorzugsweise mindestens vier Düsenöffnungen in verschiedenen Bereichen der Anlagefläche abgegeben und sorgt dadurch dafür, dass die gesamte Anlagefläche von Verunreinigungen befreit wird. Die verschiedenen Düsenöffnungen können den Druckluftstrom vertikal zur Anlagefläche oder auch demgegenüber angewinkelt abgeben. Eine angewinkelte und somit ausgerichtete Abgabe ist insbesondere dann zweckmäßig, wenn besondere Bereiche der Schnittstelle und insbesondere der Anlagefläche besonders reinigungsbedürftig sind. Dies kann beispielsweise für elektrische Kontaktflächen gelten, mittels derer Steuersignale oder elektrische Leistung an das Werkzeug übertragen werden.

Die Mehrzahl der Düsenöffnungen wird von einem gemeinsamen Druckluftanschluss mit Durchluft gespeist. Der Aufwand zur Herstellung der Druckluftverbindung ist daher vergleichsweise gering. Es ist ausreichend, einen Zuführschlauch an einer Stelle an die Werkzeugschnittstelle, insbesondere einen Basiskörper der Werkzeugschnittstelle anzuschließen, um hierdurch die mehreren Düsenöffnungen zu vorsorgen.

Erfindungsgemäß ist vorgesehen, dass die Werkzeugschnittstelle über den bereits genannten Basiskörper verfügt. Dieser Basiskörper ist vorzugsweise metallisch ausgebildet und bildet zumindest einen Teil der Anlagefläche der Werkzeugschnittstelle.

Weiterhin ist vorgesehen, dass die Werkzeugschnittstelle über einen vom Basiskörper separaten Düsenkörper verfügt, der von mehreren und somit mindestens zwei Düsenöffnungen durchdrungen ist. Dieser Düsenkörper wird am Basiskörper angebracht und durch mindestens einen Luftkanal im Basiskörper mit Druckluft gespeist. Der Düsenkörper kann auch metallisch ausgebildet sein. Bevorzugt ist jedoch eine Gestaltung, bei der der Düsenkörper aus Kunststoff gefertigt ist, insbesondere aus Polyoxymethylen oder aus Polyurethan. Der Düsenkörper ist vorzugsweise als flache Düsenplatte mit weitgehend einheitlicher Wandungsstärke ausgebildet. Insbesondere vorzugsweise kann die Dicke der Düsenplatte 15 mm oder weniger, insbesondere 10 mm oder weniger, betragen. Erfindungsgemäß ist vorgesehen, dass der Basiskörper mindestens eine Vertiefung im Bereich der Anlagefläche aufweist. Diese Anlagefläche wird vom genannten Düsenkörper überdeckt. Druckluft, die der Vertiefung zugeführt wird, kann somit innerhalb der Vertiefung zu den mehreren Düsenöffnungen gelangen und hier austreten.

Die Vertiefung erfüllt vorzugsweise eine Doppelfunktion. Zusätzlich zur Verteilung der Druckluft über die Vertiefung ist in dieser mindestens ein Schraubloch vorgesehen. Dieses Schraubloch durchdringt den Basiskörper, so dass die hier eingeschobenen Befestigungsschrauben an der zur Anlagefläche gegenüberliegenden Seite des Basiskörpers der Befestigung an einem Flansch des Roboterarms dienen.

Vorzugsweise ist eine gemeinsame Vertiefung vorgesehen, in der mehrere Schraublöcher vorgesehen sind, insbesondere mindestens drei Schraublöcher. Die Schraublöcher können dabei insbesondere auf einer Kreisform angeordnet sein und gemeinsam in einer kreisförmigen oder kreisabschnittsförmigen Vertiefung angeordnet sein.

Der Düsenkörper kann auf verschiedene Arten am Basiskörper befestigt sein. Dabei ist zu berücksichtigen, dass der Düsenkörper aufgrund der Druckluft vom Basiskörper weggedrückt wird und die Befestigung dazu in der Lage sein muss, die Trennung zu unterbinden.

Eine bevorzugte Möglichkeit sieht vor, dass der Düsenkörper über eine Schraubverbindung mit dem Basiskörper verbunden ist. Die Schrauben sind dabei vorzugsweise von außen durch den Düsenkörper in den Basiskörper eingeschraubt. Vorzugweise sind mindestens drei Schrauben vorgesehen, insbesondere vorzugsweise mindestens vier.

Der Düsenkörper befindet sich vorzugsweise zumindest teilweise in der beschriebenen Vertiefung. Besonders bevorzugt ist es, dass der Düsenkörper an die Vertiefung derart angepasst ist, dass eine Außenseite des Düsenkörpers mit die Vertiefung umgebenden Flächenabschnitten der Anlagefläche eine einheitliche Ebene bildet. Die Außenseite des Düsenkörpers ist bei einer solchen Gestaltung ein Teil der Anlagefläche.

Die Anordnung des Düsenkörpers in der Vertiefung kann ebenfalls dem Zweck dienen, den Düsenkörper am Basiskörper festzulegen. Hierfür kann vorgesehen sein, dass der Düsenkörper in der Vertiefung reibschlüssig gehalten ist, indem er gegenüber der Vertiefung zumindest abschnittsweise ein Übermaß aufweist. Eine weitere Möglichkeit sieht vor, dass der Düsenkörper in der Vertiefung formschlüssig gehalten ist. Dies ist insbesondere erreichbar, indem die Vertiefung eine Geometrie aufweist, deren Querschnitt sich zumindest abschnittsweise in Richtung der Anlagefläche verjüngt, beispielsweise in Art eines Schwalbenschwanzes. Der Düsenkörper ist hierin eingesetzt und durch Übermaß gegenüber der schmalsten Stelle der Vertiefung gegen Trennen gesichert. Die Schwalbenschwanzform oder eine anderweitige sich zur Anlagefläche verjüngende Formgebung der Vertiefung ist darüber hinaus von Vorteil, da sie eine Neigung des Düsenkörpers zum selbsttätigen Abdichten der Spalten zwischen Düsenkörper und Basiskörper begünstigt. Wird der Düsenkörper durch Druckluft an seiner Innenseite nach außen gedrückt, do schließt dies die Spalten und die Luft wird weitgehend vollständig in bestimmungsgemäßer Weise durch die Düsenöffnungen abgegeben.

Besonders bevorzugt wird eine Gestaltung, bei der der Düsenkörper sowohl in oben beschriebener Weise formschlüssig durch die Formgebung der Vertiefung sowie zusätzlich über Schrauben gesichert ist.

Die Vertiefung weist vorzugsweise mindestens eine Auflagefläche zur Auflage des Düsenkörpers auf. Insbesondere kann die Vertiefung derart ausgestaltet sein, dass solche Auflageflächen und die oben beschriebenen Schraublöcher im Wechsel vorgesehen sind. Jeweils zwischen zwei Schraublöchern ist somit eine Auflagefläche vorgesehen.

Damit die Luft innerhalb der Vertiefung zu den unterschiedlichen Düsenöffnungen gelangen kann, kann vorgesehen sein, dass in die genannten Auflageflächen eine Luftführungsnut eingebracht ist, durch die sich die Druckluft ausbreitet. Alternativ oder zusätzlich kann vorgesehen sein, dass der Düsenkörper auf einer Innenseite eine Luftführungsnut aufweist, durch die die Luft zu den Düsenöffnungen strömen kann.

Wie eingangs bereits erläutert, betrifft die Erfindung auch einen Roboter mit einer Werkzeugschnittstelle der beschriebenen Art. Dieser Roboter verfügt über einen Roboterarm, an dessen distalem Ende die Werkzeugschnittstelle vorgesehen ist. Das Werkzeug kann mittels des Roboterarms somit zu einer Arbeitsposition geführt werden und dort bewegt werden. Der Roboterarm kann weiterhin in den Bereich einer Wechselstation geführt werden, in der ein Werkzeug abgekoppelt wird und nachfolgend ein neues Werkzeug angekoppelt wird.

Insbesondere bietet sich die Verwendung der beschriebenen Werkzeugschnittstelle an, wenn das Werkzeug als Werkzeug zur spanenden Bearbeitung vorgesehen ist, insbesondere ein Bohrwerkzeug. Bei der spanenden Bearbeitung und insbesondere beim Bohren entsteht eine hohe Belastung durch Staub und Späne, der durch die erfindungsgemäße Abblaseeinrichtung gut begegnet werden kann.

Das Werkzeug weist vorzugsweise eine zur Werkzeugschnittstelle korrespondierende Schnittstelle auf, wobei diese vorzugsweise ebenfalls über einen Basiskörper verfügt, der die Anlagefläche für die Werkzeugschnittstelle bietet.

Die Erfindung betrifft neben der Werkzeugschnittstelle und dem Roboter auch ein entsprechendes Verfahren, bei dem im Zuge eines Kopplungsvorgangs, im Rahmen dessen ein Werkzeug an die Werkzeugschnittstelle angekoppelt wird, oder im Zuge eines Entkopplungsvorgangs, im Rahmen dessen ein Werkzeug von der Werkzeugschnittstelle abgekoppelt wird, über die Mehrzahl von Düsenöffnungen Druckluft in einen Zwischenbereich zwischen der Werkzeugschnittstelle und dem Werkzeug eingebracht wird. Die Druckluftzufuhr erfolgt dabei vorzugsweise in einem Zwischenzustand, in dem die beidseitigen Anlageflächen nur wenig voneinander beabstandet sind, vorzugsweise um weniger als 10 cm, insbesondere vorzugsweise um weniger als 2 cm. Hierdurch wird die austretende Luft umgelenkt und gelangt durch den Spalt zwischen den Anlageflächen nach außen, wobei sie Staub und Späne mitreist und die Anlageflächen somit reinigt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt einen erfindungsgemäßen Roboter in einer Gesamtdarstellung.
Fig. 2 zeigt eine roboterseitige Werkzeugschnittstelle sowie eine korrespondierende Schnittstelle auf Seite eines Werkzeugs.
Fig. 3 zeigt den Aufbau einer Abblaseeinrichtung auf Seite der roboterseitigen Werkzeugschnittstelle mitsamt Düsenöffnungen zur Abgabe von Druckluft.
Fig. 4 und 5 zeigen in geschnittenen Darstellungen die roboterseitigen Werkzeugschnittstelle und den Pfad der Druckluft zu den Düsenöffnungen.

### DETAILLIERTE BESCHREIBUNG DER AUSFÜHRUNGSBEISPIELE

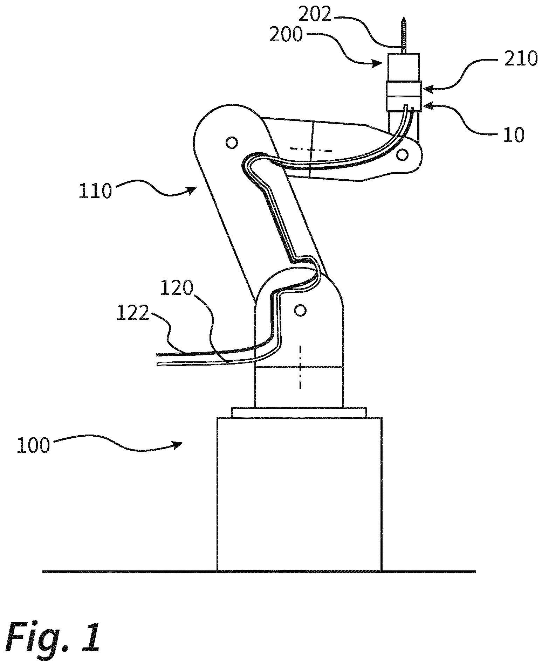

Fig. 1 zeigt einen Roboter 100, der über einen Roboterarm 110 verfügt, mittels dessen ein Werkzeug 200 flexibel bewegbar ist und insbesondere in eine Arbeitsposition verbracht werden kann und zum Zwecke des Werkzeugwechsels an eine Wechselstation bewegt werden kann. Das Werkzeug 200 ist vorliegend als Bohrwerkzeug ausgebildet und verfügt über einen Bohrer 202, mittels dessen Bohrungen in Oberflächen eingebracht werden können. Entlang des Roboterarms 110 verlaufen Versorgungsleitungen 120, 122, wobei die Versorgungsleitung 122 zur Übertragung elektrischer Leistung und/oder elektrischer Signale vorgesehen ist. Die Versorgungsleitung 120 ist eine Druckluftleitung, mittels derer der roboterseitigen Werkzeugschnittstelle 10 Druckluft zugeführt wird, um die Schnittstelle von Verschmutzungen zu befreien und somit einen zuverlässigen Werkzeugwechsel sowie einen störungsfreien Betrieb zu gewährleisten.

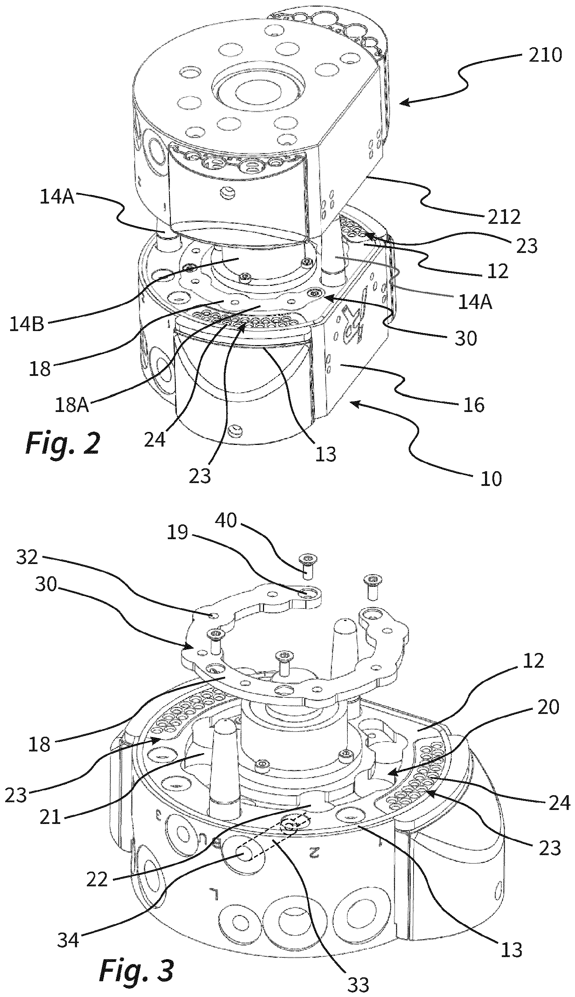

Die Fig. 2 zeigt die roboterseitige Werkzeugschnittstelle 10 sowie das korrespondierende Gegenstück der werkzeugseitigen Schnittstelle 210 in einer Gesamtdarstellung, wobei im Zustand dieser Darstellung die Schnittstellen 10, 210 nicht miteinander gekoppelt sind.

Auf Seiten der Werkzeugschnittstelle 10, die am Roboterarm 110 vorgesehen ist, ist ein metallischer Basiskörper 16 vorgesehen. Die in Fig. 2 nach oben weisende Fläche 12 des Basiskörpers 16 bildet eine Anlagefläche 12 zur flächigen Anlage an einer korrespondierenden Anlagefläche 212 der werkzeugseitigen Schnittstelle 210. Im Bereich dieser Anlagefläche ist eine Kopplungseinrichtung 14 vorgesehen, die aus mehreren Teilelementen besteht, nämlich aus zwei konischen Ausrichtungsstiften 14A, die in korrespondierende Ausnehmungen an der Schnittstelle 210 einfahren, sowie einen zentrischen Verriegelungsmechanismus 14B, an dem radial ausfahrbare Verriegelungskörper in Form von Kugeln 14C vorgesehen sind, die nach Ankoppeln des Werkzeugs 200 nach außen gedrückt werden, um eine formschlüssige Kopplung mit der werkzeugseitigen Schnittstelle 210 zu erzielen.

Im Bereich der Anlagefläche 12 sind zwei Felder 23 mit elektrischen Kontaktflächen 24 vorgesehen. Diese sind zur Übertragung elektrischer Energie und zur Übertragung von Steuersignalen zum Werkzeug 200 vorgesehen und in nicht näher dargestellter Weise mit der Versorgungsleitung 122 am Roboterarm 110 verbunden. In nicht näher dargestellter Weise sind gegenüberliegend an der werkzeugseitigen Schnittstelle 210 korrespondierende Kontakte vorgesehen.

Die Anlagefläche 12 ist randseitig versehen mit einer Dichtung 13, die nach Koppelung des Werkzeugs 200 an die Werkzeugschnittstelle 10 verhindert, dass Schmutz oder Späne in einen Zwischenraum zwischen den Anlageflächen 12, 212 und in den Bereich der Kontaktflächen 24 gelangen kann. Um diese Aufgabe zu erfüllen, ist es jedoch erforderlich, dass nicht bereits beim Ankoppeln auf den Anlageflächen 12, 212 Späne oder Verunreinigungen vorliegen. Um dies zu verhindern, ist eine Abblaseeinrichtung 30 vorgesehen.

Bezug nehmend auf Fig. 3 ist zu erkennen, dass im Bereich der basiskörperseitigen Anlagefläche 12 eine Vertiefung 20 vorgesehen ist. Diese Vertiefung 20, die in etwa die Form eines Kreisbogens aufweist, der etwa 300° überspannt, besteht aus verschiedenen Teilbereichen, nämlich aus sechs Schraublöchern 22, im Bereich derer vertieft Schrauben vorgesehen sind, um den Basiskörper 16 an einem Flansch des Roboterarms 110 zu befestigen, sowie aus Zwischenbereichen jenseits und zwischen den Schraublöchern 22, die Auflageflächen 21 bereitstellen, welche jedoch gegenüber der Anlagefläche 12 zurückgesetzt sind.

In die so geformte Vertiefung 20 ist in der auch in Fig. 2 zu erkennenden Weise ein Düsenkörper 18 eingesetzt, dessen Außenkontur im Wesentlichen der Kontur der Vertiefung 20 entspricht. Wie anhand der Fig. 2 zu erkennen ist, wird dieser Düsenkörper 18 derart in die Vertiefung 20 eingesetzt, dass seine Außenseite 18A im Wesentlichen flächenbündig mit den umgebenden Teilen der Anlagefläche 12 abschließt. Im eingesetzten Zustand schützt der Düsenkörper 18 die Schrauben. Soll die Werkzeugschnittstelle 10 vom Roboterarm 110 getrennt werden, so wird der Düsenkörper 18 entnommen, so dass anschließend Zugang zu den Befestigungsschrauben gegeben ist.

Hauptaufgabe des Düsenkörpers 18 ist jedoch die Bereitstellung von insgesamt sechs zur Abblaseeinrichtung 30 gehörenden Düsenöffnungen 32, durch die Druckluft aus der Vertiefung 20 ausgetragen werden kann in einen Spalt zwischen den Anlageflächen 12, 212. Diese Druckluft ist geeignet, sämtliche Späne und anderweitige Verunreinigungen, die sich im Bereich der Anlageflächen 12, 212 und insbesondere im Bereich der Kontaktflächen 24 befinden, von hier wegzublasen.

Wie anhand der Schrauben 40 und der entsprechenden Schrauböffnungen 19 im Düsenkörper 18 ersichtlich, wird der Düsenkörper 18 bestimmungsgemäß am Basiskörper 16 festgeschraubt.

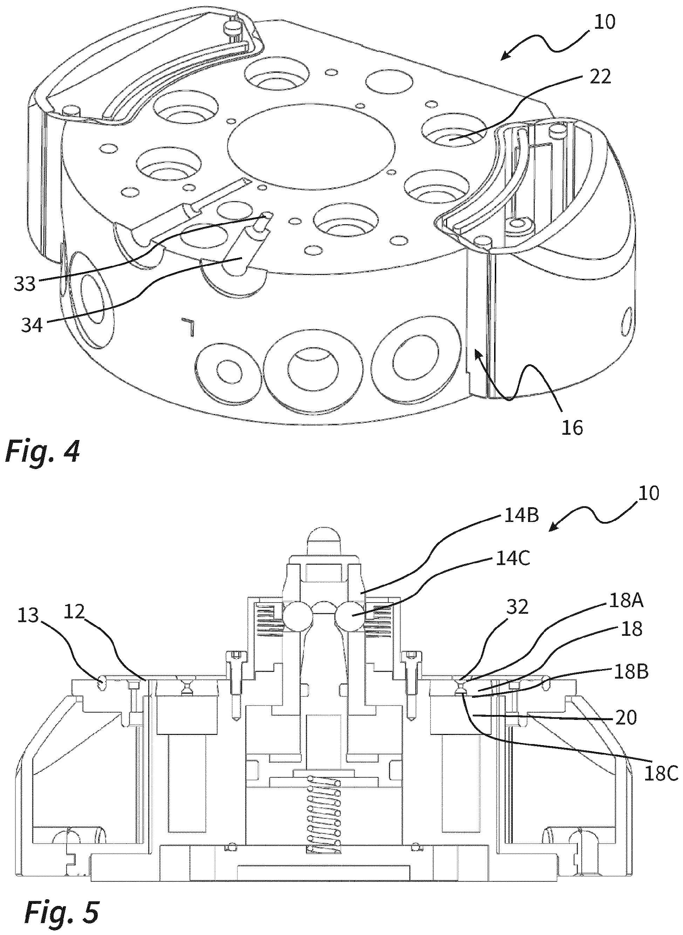

Um den Überdruck, der bei der Zuführung von Druckluft in der Vertiefung 20 entsteht, halten zu können, kann der Düsenkörper 18 in der in Fig. 5 ersichtlichen Weise zusätzlich einen sich nach oben in Richtung der Anlagefläche 12 verjüngenden Querschnitt aufweisen. Korrespondierend hierzu kann auch die Vertiefung 20 selbst in diesem Bereich eine verjüngende Formgebung aufweisen. Dies führt zu der in Fig. 5 ersichtlichen Schwalbenschwanzgeometrie. Bei hohem Druck in der Vertiefung 20 wird aufgrund dieser Geometrie der Düsenkörper 18 nach oben gedrückt und verschließt hierbei Spalte zwischen dem Düsenkörper 18 und dem Basiskörper 16. Die Druckluft kann dementsprechend nur durch die Düsenöffnungen 32 austreten.

Die Zufuhr der Druckluft erfolgt über einen einzigen Druckluftanschluss 34, der an der Außenseite des Basiskörpers 16 vorgesehen ist. Dies ist in Fig. 4 ersichtlich. Von hier aus strömt die Druckluft durch einen Druckluftkanal 33 bis in die Vertiefung 20. Die Mündung des Druckluftkanals 33 in die Vertiefung 20 ist aus Fig. 3 ersichtlich.

Damit die Druckluft auch im Bereich der Auflageflächen 21 innerhalb der Vertiefung 20 weiterströmen kann und somit alle Düsenöffnungen 32 erreichen kann, können in den Auflageflächen 21 Nuten vorgesehen sein. Alternativ oder zusätzlich kann auch eine Luftführungsnut 18C an einer Innenseite des Düsenkörpers 18 vorgesehen sein. Dies ist aus Fig. 5 ersichtlich.

Die Düsenöffnungen 32 können alle eine einheitliche Geometrie aufweisen. Um den jeweils unterschiedlichen geometrisch bedingten Widerstand in der Luftzuführung zu den Luftdüsen zu kompensieren, kann es jedoch auch von Vorteil sein, die Düsenöffnungen mit unterschiedlichen lichten Querschnitten oder Geometrien auszustatten, um den erhöhten Widerstand bei der Luftzuführung zu kompensieren. Auf diese Art und Weise ist es möglich, trotz dieses uneinheitlichen Luftwiderstandes einen im Wesentlichen einheitlichen Luftstrom an allen Düsenöffnungen zu erzielen.

Die Düsenöffnungen können bezogen auf die Anlagefläche die Druckluft senkrecht abgeben. Es kann jedoch auch zweckmäßig sein, die Düsenöffnungen mit einer schräg gestellten Geometrie zu versehen, um die Luft gezielt in eine bestimmte Richtung zu lenken. Dies ist insbesondere dann sinnvoll, um die elektrische Kontaktflächen 24 zur Übertragung elektrischer Leistung oder elektrischer Signale zu reinigen. Ist dies der Fall, so sind vorzugsweise einige oder alle Luftdüsen derart ausgerichtet, dass sie die Druckluft in Richtung dieser Kontaktflächen abgeben.

## Patentansprüche

1. Werkzeugschnittstelle (10) zur Ankopplung eines Werkzeugs (200) an einen Roboter (100) mit den folgenden Merkmalen:
a. die Werkzeugschnittstelle (10) verfügt über eine Anlagefläche (12) zur Anlage einer korrespondierenden Anlagefläche (212) des Werkzeugs (200), und
b. die Werkzeugschnittstelle (10) verfügt über eine Kopplungseinrichtung (14) zur mechanischen Kopplung des Werkzeugs (200) an die Werkzeugschnittstelle (10), und
c. die Werkzeugschnittstelle (10) verfügt über eine Abblaseeinrichtung (30) zur Erzeugung eines Abblaseluftstroms im Bereich der Anlagefläche (12), und
d. die Abblaseeinrichtung (30) weist eine Mehrzahl von Düsenöffnungen (32) zur Abgabe des Abblaseluftstroms auf, wobei die Düsenöffnungen (32) von einem gemeinsamen Druckluftanschluss (34) der Werkzeugschnittstelle (10) mit Druckluft gespeist werden, und
e. die Werkzeugschnittstelle (10) verfügt über einen Basiskörper (16), an dem der gemeinsame Druckluftanschluss (34) vorgesehen ist, und
f. die Werkzeugschnittstelle (10) verfügt über einen Düsenkörper (18), der am Basiskörper (16) angebracht ist und der von einer Mehrzahl der Düsenöffnungen (32) durchdrungen ist, und
g. der Basiskörper (16) weist mindestens eine Vertiefung (20) im Bereich der Anlagefläche (12) auf, und
h. der Düsenkörper (18) überdeckt die Vertiefung (20), **gekennzeichnet durch** das folgende weitere Merkmal:
i. in der Vertiefung (20) ist mindestens ein Schraubloch (22) vorgesehen zur Anbringung der Werkzeugschnittstelle (10) an einem Roboterarm (110) mittels Befestigungsschrauben.

2. Werkzeugschnittstelle (10) nach Anspruch 1 mit dem folgenden weiteren Merkmal:
a. in der Vertiefung (20) ist eine Mehrzahl von Schraublöchern (22) zur Anbringung der Werkzeugschnittstelle (10) an einem Roboterarm (110) mittels Befestigungsschrauben vorgesehen, wobei insbesondere vorzugsweise die Schraublöcher (22) auf einer Kreisform angeordnet sind.

3. Werkzeugschnittstelle (10) nach Anspruch 1 oder 2 mit dem folgenden weiteren Merkmal:
a. der Düsenkörper (18) ist mittels einer Schraubverbindung mit dem Basiskörper (16) verbunden.

4. Werkzeugschnittstelle (10) nach einem der vorstehenden Ansprüche mit dem folgenden weiteren Merkmal:
a. der Düsenkörper (18) befindet sich zumindest teilweise innerhalb der Vertiefung (20) im Basiskörper (16),
vorzugsweise mit mindestens einem der folgenden zusätzlichen Merkmale:
b. der Düsenkörper (18) ist in der Vertiefung (20) reibschlüssig gehalten und/oder
c. der Düsenkörper (18) ist in der Vertiefung (20) formschlüssig gehalten, insbesondere durch eine sich im Querschnitt in Richtung der Anlagefläche (12) verjüngende Formgebung der Vertiefung (20), und/oder
d. der Düsenkörper (18) ist an die Vertiefung (20) derart angepasst, dass eine Außenseite (18A) des Düsenkörpers (18) mit die Vertiefung umgebenden Flächenabschnitten der Anlagefläche (12) eine einheitliche Ebene bildet.

5. Werkzeugschnittstelle (10) nach einem der vorstehenden Ansprüche mit dem folgenden weiteren Merkmal:
a. der Düsenkörper (18) ist aus Kunststoff gefertigt, vorzugsweise aus Polyoxymethylen oder aus Polyurethan, und/oder
b. der Basiskörper (16) ist aus Metall gefertigt.

6. Werkzeugschnittstelle (10) nach einem der vorstehenden Ansprüche mit den folgenden weiteren Merkmalen:
a. innerhalb der Vertiefung (20) ist mindestens eine Auflagefläche (21) zur Auflage des Düsenkörpers (18) vorgesehen, wobei in der Auflagefläche (21) eine Luftführungsnut vorgesehen ist, durch die die Luft zu den Düsenöffnungen (32) strömen kann, und/oder
b. der Düsenkörper (18) weist auf einer Innenseite (18B) eine Luftführungsnut (18C) auf, durch die die Luft zu den Düsenöffnungen (32) strömen kann.

7. Werkzeugschnittstelle (10) nach einem der vorstehenden Ansprüche mit den folgenden weiteren Merkmalen:
a. der Düsenkörper (18) ist als flacher Düsenkörper (18) mit weitgehend einheitlicher Wandungsstärke ausgebildet, und
b. die Düsenöffnungen (32) weisen eine gegenüber einem Normalenvektor des Düsenkörpers (18) schräggestellte Erstreckungsrichtung auf.

8. Werkzeugschnittstelle (10) nach einem der vorstehenden Ansprüche mit dem folgenden weiteren Merkmal:
a. die Werkzeugschnittstelle (10) weist elektrische Kontaktflächen (24) zur Übertragung von Daten und/oder elektrischer Energie an das angekoppelte Werkzeug (200) auf,
vorzugsweise mit mindestens einem der folgenden zusätzlichen Merkmale:
b. die elektrischen Kontaktflächen (24) sind im Bereich der Anlagefläche (12) vorgesehen, und/oder
c. mindestens eine Düsenöffnung (32) ist in Richtung der elektrischen Kontaktflächen (24) ausgerichtet, wobei vorzugsweise die Mehrzahl der Düsenöffnungen (32) in Richtung der elektrischen Kontaktflächen (24) ausgerichtet sind.

9. Werkzeugschnittstelle (10) nach einem der vorstehenden Ansprüche mit mindestens einem der folgenden weiteren Merkmale:
a. die Kopplungseinrichtung (14) umfasst mindestens einen konischen Ausrichtungsstift (14A), vorzugsweise zwei konische Ausrichtungsstifte (14A), oder das Kopplungsmittel umfasst mindestens eine Aufnahme für einen konischen Ausrichtungsstift, vorzugsweise zwei Aufnahmen für konische Ausrichtungsstifte, und/oder
b. die Kopplungseinrichtung (14) umfasst einen Verriegelungsmechanismus (14B) zur formschlüssigen Kopplung des Werkzeugs (200) an der Werkstückschnittstelle.

10. Werkzeugschnittstelle (10) nach einem der vorstehenden Ansprüche mit dem folgenden zusätzlichen Merkmal:
a. die Anlagefläche (12) ist außenseitig von einer Dichtung (13) umgeben.

11. Werkzeugschnittstelle (10) nach Anspruch 10 mit dem folgenden zusätzlichen Merkmal:
a. die elektrische Kontaktflächen (24) zur Übertragung von Daten und/oder elektrischer Energie sind derart an der Anlagefläche (12) vorgesehen, dass sie außenseitig von der Dichtung (13) umgeben sind und in einem gekoppelten Zustand durch die Dichtung (13) gegen Verschmutzungen von außen geschützt sind.

12. Werkzeugschnittstelle (10) nach einem der vorstehenden Ansprüche mit dem folgenden zusätzlichen Merkmal:
a. mindestens zwei Düsenöffnungen (32) weisen eine voneinander abweichende Geometrie und/oder einen voneinander abweichenden minimalen lichten Querschnitt auf.

13. Roboter (100) mit dem folgenden Merkmal:
a. der Roboter (100) verfügt über einen beweglichen Roboterarm (110), an dessen distalem Ende eine Werkzeugschnittstelle (10) vorgesehen ist,
**gekennzeichnet durch** das folgende Merkmal:
b. die Werkzeugschnittstelle (10) ist nach einem der vorstehenden Ansprüche ausgebildet.

14. Roboter nach Anspruch 13 mit dem folgenden weiteren Merkmal:
a. an der Werkzeugschnittstelle (10) ist ein Werkzeug (200) zur spanenden Bearbeitung angebracht, insbesondere ein Bohrwerkzeug (200),
b. das Werkzeug (200) weist eine zur Werkzeugschnittstelle (10) am Roboterarm (110) korrespondierende Werkzeugschnittstelle (210) auf.

15. Verfahren zum Betrieb eines Roboters nach einem der Ansprüche 13 oder 14 mit den folgenden Merkmalen:
a. im Zuge eines Kopplungsvorgangs, im Rahmen dessen ein Werkzeug (200) an die Werkzeugschnittstelle (10) angekoppelt wird, wird über die Mehrzahl von Düsenöffnungen (32) Druckluft in einen Zwischenbereich zwischen der Werkzeugschnittstelle (10) und dem Werkzeug (200) eingebracht, und/oder
b. im Zuge eines Entkopplungsvorgangs, im Rahmen dessen ein Werkzeug (200) von der Werkzeugschnittstelle (10) abgekoppelt wird, wird über die Mehrzahl von Düsenöffnungen (32) Druckluft in einen Zwischenbereich zwischen der Werkzeugschnittstelle (10) und dem Werkzeug (200) eingebracht.

## Claims

1. Tool interface (10) for coupling a tool (200) to a robot (100), having the following features:
a. the tool interface (10) has an abutment face (12) for abutting a corresponding abutment face (212) of the tool (200), and
b. the tool interface (10) has a coupling device (14) for mechanically coupling the tool (200) to the tool interface (10), and
c. the tool interface (10) has a blow-off device (30) for producing a blow-off air flow in the region of the abutment face (12), and
d. the blow-off device (30) has a plurality of nozzle openings (32) for discharging the blow-off air flow, wherein the nozzle openings (32) are supplied with compressed air by a common compressed air connection (34) of the tool interface (10), and
e. the tool interface (10) has a base member (16), on which the common compressed air connection (34) is provided, and
f. the tool interface (10) has a nozzle member (18) which is fitted to the base member (16) and through which a plurality of nozzle openings (32) extend, and
g. the base member (16) has at least one recess (20) in the region of the abutment face (12), and
h. the nozzle member (18) covers the recess (20), **characterized by** the following further feature:
i. at least one screw hole (22) is provided in the recess (20) in order to fit the tool interface (10) to a robot arm (110) by means of mounting screws.

2. Tool interface (10) according to Claim 1, having the following further feature:
a. a plurality of screw holes (22) are provided in the recess (20) in order to fit the tool interface (10) to a robot arm (110) by means of mounting screws, wherein particularly preferably the screw holes (22) are arranged in a circular shape.

3. Tool interface (10) according to Claim 1 or 2, having the following further feature:
a. the nozzle member (18) is connected to the base member (16) by means of a screw connection.

4. Tool interface (10) according to one of the preceding claims, having the following further feature:
a. the nozzle member (18) is located at least partially inside the recess (20) in the base member (16),
preferably having at least one of the following additional features:
b. the nozzle member (18) is retained in the recess (20) in a frictionally engaging manner, and/or
c. the nozzle member (18) is retained in the recess (20) in a positive-locking manner, in particular by a shape, which tapers in cross section in the direction of the abutment face (12), of the recess (20), and/or
d. the nozzle member (18) is adapted to the recess (20) in such a manner that an outer side (18A) of the nozzle member (18) forms a uniform plane with face portions, which surround the recess, of the abutment face (12).

5. Tool interface (10) according to one of the preceding claims, having the following further feature:
a. the nozzle member (18) is made of plastics material, preferably from polyoxymethylene or polyurethane, and/or
b. the base member (16) is made of metal.

6. Tool interface (10) according to one of the preceding claims, having the following further feature:
a. at least one support face (21) for supporting the nozzle member (18) is provided inside the recess (20), wherein an air guiding groove, through which the air can flow to the nozzle openings (32), is provided in the support face (21), and/or
b. the nozzle member (18) has at an inner side (18B) an air guiding groove (18C) through which the air can flow to the nozzle openings (32).

7. Tool interface (10) according to one of the preceding claims, having the following further feature:
a. the nozzle member (18) is in the form of a planar nozzle member (18) with a substantially uniform wall thickness, and
b. the nozzle openings (32) have an extent direction which is oblique with respect to a normal vector of the nozzle member (18).

8. Tool interface (10) according to one of the preceding claims, having the following further feature:
a. the tool interface (10) has electrical contact faces (24) for transmitting data and/or electrical energy to the connected tool (200),
preferably having at least one of the following additional features:
b. the electrical contact faces (24) are provided in the region of the abutment face (12), and/or
c. at least one nozzle opening (32) is orientated in the direction of the electrical contact faces (24), wherein preferably the plurality of nozzle openings (32) are orientated in the direction of the electrical contact faces (24).

9. Tool interface (10) according to one of the preceding claims, having at least one of the following further features:
a. the coupling device (14) comprises at least one conical orientation pin (14A), preferably two conical orientation pins (14A), or the coupling means comprises at least one receiving member for a conical orientation pin, preferably two receiving members for conical orientation pins, and/or
b. the coupling device (14) comprises a locking mechanism (14B) for connecting the tool (200) to the workpiece interface in a positive-locking manner.

10. Tool interface (10) according to one of the preceding claims, having the following additional feature:
a. the abutment face (12) is surrounded externally by a seal (13).

11. Tool interface (10) according to Claim 10, having the following additional feature:
a. the electrical contact faces (24) for transmitting data and/or electrical energy are provided on the abutment face (12) in such a manner that they are surrounded externally by the seal (13) and are protected in a connected state by the seal (13) against contamination from the exterior.

12. Tool interface (10) according to one of the preceding claims, having the following additional feature:
a. at least two nozzle openings (32) have a mutually different geometry and/or a mutually different minimum clear cross section.

13. Robot (100) having the following feature:
a. the robot (100) has a movable robot arm (110), at the distal end of which a tool interface (10) is provided,
**characterized by** the following feature:
b. the tool interface (10) is constructed according to one of the preceding claims.

14. Robot according to Claim 13, having the following further feature:
a. a tool (200) for the chip-removing processing is fitted to the tool interface (10), in particular a drilling tool (200),
b. the tool (200) has a tool interface (210) which corresponds to the tool interface (10) on the robot arm (110).

15. Method for operating a robot according to one of Claims 13 and 14, having the following features:
a. during a coupling operation, in the context of which a tool (200) is connected to the tool interface (10), compressed air is introduced via the plurality of nozzle openings (32) into an intermediate region between the tool interface (10) and the tool (200) and/or
b. during an uncoupling operation, in the context of which a tool (200) is disconnected from the tool interface (10), compressed air is introduced via the plurality of nozzle openings (32) into an intermediate region between the tool interface (10) and the tool (200).

## Revendications

1. Interface d'outil (10) servant à l'accouplement d'un outil (200) à un robot (100), présentant les caractéristiques suivantes :
a. l'interface d'outil (10) possède une surface d'appui (12) servant à l'appui d'une surface d'appui (212) correspondante de l'outil (200), et
b. l'interface d'outil (10) possède un dispositif d'accouplement (14) servant à l'accouplement mécanique de l'outil (200) à l'interface d'outil (10), et
c. l'interface d'outil (10) possède un dispositif de soufflage (30) servant à la génération d'un d'air de soufflage dans la région de la surface d'appui (12), et
d. le dispositif de soufflage (30) présente une pluralité d'ouvertures de buse (32) servant à la distribution du flux d'air de soufflage, les ouvertures de buse (32) étant alimentées en air comprimé par un raccord d'air comprimé (34) commun de l'interface d'outil (10), et
e. l'interface d'outil (10) possède un corps de base (16), au niveau duquel le raccord d'air comprimé (34) commun est prévu, et
f. l'interface d'outil (10) possède un corps de buse (18) qui est monté sur le corps de base (16) et qui est traversé par une pluralité d'ouvertures de buse (32), et
g. le corps de base (16) présente au moins un évidement (20) dans la région de la surface d'appui (12), et
h. le corps de buse (18) recouvre l'évidement (20), **caractérisée par** la caractéristique supplémentaire suivante :
i. dans l'évidement (20) est prévu au moins un trou de vis (22) servant au montage de l'interface d'outil (10) sur un bras de robot (110) à l'aide de vis de fixation.

2. Interface d'outil (10) selon la revendication 1, présentant les caractéristiques supplémentaires suivantes :
a. dans l'évidement (20) est prévue une pluralité de trou de vis (22) servant au montage de l'interface d'outil (10) sur un bras de robot (110) à l'aide de vis de fixation, en particulier les trous de vis (22) étant disposés de préférence sur une forme circulaire.

3. Interface d'outil (10) selon la revendication 1 ou 2, présentant les caractéristiques supplémentaires suivantes :
a. le corps de buse (18) est relié au corps de base (16) à l'aide d'une liaison par vissage.

4. Interface d'outil (10) selon l'une des revendications précédentes, présentant les caractéristiques supplémentaires suivantes :
a. le corps de buse (18) se trouve au moins partiellement à l'intérieur de l'évidement (20) dans le corps de base (16),
de préférence présentant au moins l'une des caractéristiques supplémentaires suivantes :
b. le corps de buse (18) est retenu par friction dans l'évidement (20) et/ou
c. le corps de buse (18) est retenu par complémentarité de formes dans l'évidement (20), en particulier par un façonnage de l'évidement (20) qui se rétrécit en section transversale en direction de la surface d'appui (12), et/ou
d. le corps de buse (18) est adapté à l'évidement (20) de telle sorte qu'un côté extérieur (18A) du corps de buse (18) forme un plan uniforme avec des parties de surface de la surface d'appui (12) qui entourent l'évidement.

5. Interface d'outil (10) selon l'une des revendications précédentes, présentant les caractéristiques supplémentaires suivantes :
a. le corps de buse (18) est fabriqué à partir de matière synthétique, de préférence à partir de polyoxyméthylène ou à partir de polyuréthane, et/ou
b. le corps de base (16) est fabriqué à partir de métal.

6. Interface d'outil (10) selon l'une des revendications précédentes, présentant les caractéristiques supplémentaires suivantes :
a. à l'intérieur de l'évidement (20) est prévue au moins une surface de support (21) servant au support du corps de buse (18), une rainure de guidage d'air étant prévue dans la surface de support (21), rainure à travers laquelle l'air peut s'écouler jusqu'aux ouvertures de buse (32), et/ou
b. le corps de buse (18) présente, sur un côté intérieur (18B), une rainure de guidage d'air (18C) à travers laquelle l'air peut s'écouler jusqu'aux ouvertures de buse (32).

7. Interface d'outil (10) selon l'une des revendications précédentes, présentant les caractéristiques supplémentaires suivantes :
a. le corps de buse (18) est réalisé sous forme de corps de buse (18) plat présentant une épaisseur de paroi uniforme dans une large mesure, et
b. les ouvertures de buse (32) présentent une direction d'étendue inclinée par rapport à un vecteur normal au corps de buse (18).

8. Interface d'outil (10) selon l'une des revendications précédentes, présentant les caractéristiques supplémentaires suivantes :
a. l'interface d'outil (10) présente des surfaces de contact électrique (24) servant à la transmission de données et/ou d'énergie électrique à l'outil (200) accouplé,
de préférence présentant au moins l'une des caractéristiques supplémentaires suivantes :
b. les surfaces de contact électrique (24) sont prévues dans la région de la surface d'appui (12), et/ou
c. au moins une ouverture de buse (32) est orientée en direction des surfaces de contact électrique (24), de préférence la pluralité d'ouvertures de buse (32) étant orientées en direction des surfaces de contact électrique (24).

9. Interface d'outil (10) selon l'une des revendications précédentes, présentant au moins l'une des caractéristiques supplémentaires suivantes :
a. le dispositif d'accouplement (14) comprend au moins une goupille d'orientation conique (14A), de préférence deux goupilles d'orientation coniques (14A), ou le moyen d'accouplement comprend au moins un logement pour une goupille d'orientation conique, de préférence deux logements pour des goupilles d'orientation coniques, et/ou
b. le dispositif d'accouplement (14) comprend un mécanisme de verrouillage (14B) servant à l'accouplement par complémentarité de formes de l'outil (200) à l'interface d'outil.

10. Interface d'outil (10) selon l'une des revendications précédentes, présentant la caractéristique supplémentaire suivante :
a. la surface d'appui (12) est entourée du côté extérieur par un joint d'étanchéité (13).

11. Interface d'outil (10) selon la revendication 10, présentant la caractéristique supplémentaire suivante :
a. les surfaces de contact électrique (24) servant à la transmission de données et/ou d'énergie électrique sont prévues sur la surface d'appui (12) de telle sorte qu'elles sont entourées du côté extérieur par le joint d'étanchéité (13) et, dans un état accouplé, sont protégées par le joint d'étanchéité (13) contre des salissures provenant de l'extérieur.

12. Interface d'outil (10) selon l'une des revendications précédentes, présentant la caractéristique supplémentaire suivante :
a. au moins deux ouvertures de buse (32) présentent une géométrie différente l'une de l'autre et/ou une section transversale libre minimale différente l'une de l'autre.

13. Robot (100) présentant la caractéristique suivante :
a. le robot (100) possède un bras de robot mobile (110), à l'extrémité distale duquel est prévue une interface d'outil (10),
**caractérisé par** la caractéristique suivante :
b. l'interface d'outil (10) est réalisée selon l'une des revendications précédentes.

14. Robot selon la revendication 13, présentant la caractéristique supplémentaire suivante :
a. sur l'interface d'outil (10) est monté un outil (200) servant à l'usinage par enlèvement de copeaux, en particulier un outil à aléser (200),
b. l'outil (200) présente une interface d'outil (210) correspondant à l'interface d'outil (10) sur le bras de robot (110).

15. Procédé de fonctionnement d'un robot selon l'une des revendications 13 ou 14, présentant les caractéristiques suivantes :
a. au cours d'une opération d'accouplement, dans le cadre de laquelle un outil (200) est accouplé à l'interface d'outil (10), de l'air comprimé est introduit dans une région intermédiaire entre l'interface d'outil (10) et l'outil (200) par le biais de la pluralité d'ouvertures de buse (32), et/ou
b. au cours d'une opération de désaccouplement, dans le cadre de laquelle un outil (200) est désaccouplé de l'interface d'outil (10), de l'air comprimé est introduit dans une région intermédiaire entre l'interface d'outil (10) et l'outil (200) par le biais de la pluralité d'ouvertures de buse (32).
